Europäisches Patentamt

European Patent Office

Office européen des brevets

(11) Numéro de publication: **0 234 966**
**B1**

## (12) FASCICULE DE BREVET EUROPEEN

(45) Date de publication du fascicule du brevet:
05.04.89

(51) Int. Cl.⁴: **F16F 13/00**

(21) Numéro de dépôt: 87400049.0

(22) Date de dépôt: **12.01.87**

(54) **Articulation hydro-élastique.**

(30) Priorité: 22.01.86 FR 8600875
04.03.86 FR 8602983

(43) Date de publication de la demande:
02.09.87 Bulletin 87/36

(45) Mention de la délivrance du brevet:
05.04.89 Bulletin 89/14

(84) Etats contractants désignés:
DE ES GB IT

(56) Documents cités:
EP-A- 0 071 698
FR-A- 2 394 715

PATENT ABSTRACTS OF JAPAN,
vol. 10, no. 10 (M-446)[2067], 16 janvier 1986; &
JP-A-60 172 743 (KINUGAWA GOMU KOGYO
K.K.) 06-09-1985
PATENT ABSTRACTS OF JAPAN,
vol. 6, no. 26 (M-112)[904], 16 février 1982; &
JP-A-56 143 830 (BRIDGESTONE TIRE K.K.) 09-11-1981
PATENT ABSTRACTS OF JAPAN,
vol. 10, no. 62 (M-460)[2119], 12 mars 1986; &
JP-A-60 208 652 (TOUKAI GOMU KOGYO
K.K.) 21-10-1985

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Le Fol, Marcel, 12, Impasse du Verger
Domloup, F-35410 Chateaugiron(FR)

(74) Mandataire: Moncheny, Michel et al, c/o Cabinet
Lavoix 2 Place d'Estienne d'Orves, F-75441 Paris
Cedex 09(FR)

**Description**

La présente invention a pour objet une articulation élastique, comprenant une armature intérieure et une armature extérieure reliées par une masse en élastomère dans laquelle sont ménagées deux chambres remplies de liquide et reliées entre elles par un canal.

Dans une réalisation connue, voir par exemple le document JP-A 60 172 743, une telle articulation est réalisée en deux parties: une première partie est formée par l'armature intérieure, la masse en élastomère et une armature périphérique intermédiaire, les chambres débouchant vers l'extérieur; une deuxième partie est constituée par une armature extérieure emmanchée serrée sur l'armature intermédiaire pour assurer la fermeture des chambres. On comprend que la qualité de l'étanchéité dépend de la précision d'exécution des armatures intermédiaire et extérieure, ce qui constitue une contrainte non négligeable.

La présente invention a pour but de réaliser une articulation ne présentant pas cet inconvénient.

Suivant l'invention, l'articulation est formée de deux pièces constituées chacune par une partie de l'armature intérieure et une partie de la masse en élastomère ménageant des alvéoles démoulables axialement, l'une des pièces comprenant en outre l'armature extérieure, tandis que l'autre pièce comprend une armature secondaire, les armatures extérieure et secondaire étant serties l'une sur l'autre après serrage axial des deux pièces.

Suivant un premier mode de réalisation, le canal de liaison entre les chambres formées par les alvéoles est ménagé entre les extrémités en regard des deux parties de l'armature intérieure.

Suivant un second mode de réalisation, le canal de liaison entre les chambres formées par les alvéoles est ménagé entre les armatures secondaire et extérieure.

Suivant une troisième réalisation dans laquelle les deux chambres sont reliées par un canal ménagé entre les armatures secondaire et extérieure, lesdites chambres sont de plus reliées par deux canaux secondaires disposés en parallèle avec le canal de liaison et munis chacun d'un clapet unidirectionnel, ces clapets étant normalement fermés mais s'ouvrant dans des sens opposés en cas de différence de pression importante entre les deux chambres.

Suivant d'autres caractéristiques:
– les canaux secondaires sont ménagés dans l'une des armatures intérieures;
– chacun des deux canaux secondaires délimite un siège avec lequel coopère un clapet respectif;
– ladite armature intérieure comporte dans sa face adjacente à l'autre armature intérieure un logement annulaire débouchant en deux points diamétralement opposés dans les deux canaux secondaires, au voisinage des sièges, un anneau étant reçu dans ce logement et comportant deux doigts radiaux qui constituent lesdits clapets.

Plusieurs exemples non limitatifs de réalisation de l'invention font l'objet de la description qui suit, en référence aux dessins joints dans lesquels:

– la Figure 1 est une vue en coupe d'un premier mode de réalisation de l'articulation selon l'invention, suivant la ligne I–I de la Figure 3 perpendiculaire à l'axe d'articulation;
– la Figure 2 est une vue en coupe suivant la ligne II–II de la Figure 1;
– la Figure 3 est une coupe suivant la ligne III–III de la Figure 1;
– la Figure 4 est une vue en perspective de l'articulation des Figures 1 à 3;
– la Figure 5 est une vue en coupe d'un second mode de réalisation de l'articulation selon l'invention, suivant la ligne V–V de la figure 6;
– la Figure 6 est une vue en coupe dans le plan VI de la Figure 5;
– la Figure 7 est une vue en coupe dans le plan VII de la Figure 5;
– la Figure 8 est une vue en coupe de l'articulation suivant la ligne VIII–VIII de la Figure 9;
– la Figure 9 est une vue en coupe suivant la ligne IX–IX de la Figure 3;
– la Figure 10 est une vue en coupe suivant la ligne X–X de la Figure 9;
– la Figure 11 est une vue en coupe représentant un détail agrandi de la Figure 8;
– la Figure 12 est une vue en perspective d'un élément constitutif de l'articulation; et,
– la Figure 13 est une vue en perspective de l'ensemble de l'articulation des Figures 8 à 12.

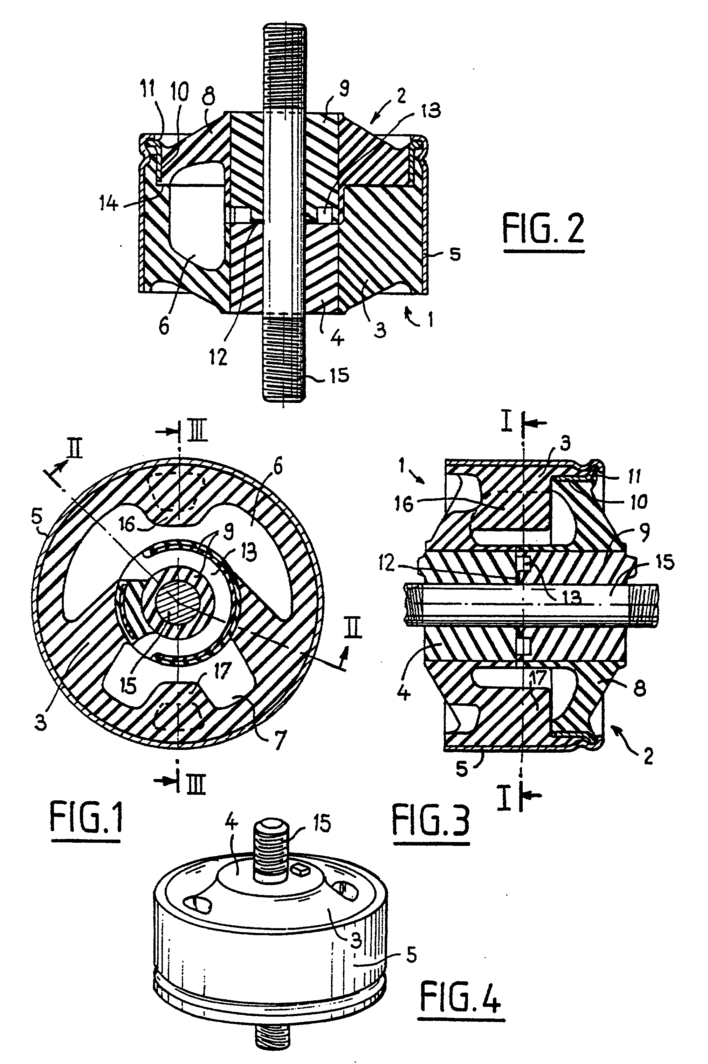

L'articulation représentée aux Figures 1 à 4 est formée par l'assemblage de deux pièces 1 et 2.

La pièce 1 comprend un bloc en élastomère 3 adhérisé sur une armature centrale 4 et sur une armature extérieure 5. Dans le bloc 3 sont ménagés deux alvéoles 6, 7 démoulant axialement.

La pièce 2 comprend un bloc en élastomère 8 adhérisé sur une armature centrale 9 et sur une armature secondaire 10 de forme généralement cylindrique, mais terminée par un rebord 11 rabattu vers l'extérieur, cette armature 10 ayant un diamètre inférieur à celui de l'armature extérieure 5. La face de l'armature centrale 9 destinée à s'appliquer sur l'armature centrale 4 de la première pièce 1 est revêtue d'une couche d'élastomère 12 destinée à assurer l'étanchéité. Sur cette même face de l'armature centrale 9 est formé un sillon 13 de forme partiellement circulaire et débouchant vers l'extérieur de l'armature 9 à chacune de ses extrémités.

L'armature secondaire 10 est destinée à s'engager dans une partie cylindrique correspondante du bloc 3 de la première pièce 1, jusqu'au contact le long d'un plan de joint 14.

Après serrage axial des deux pièces 1 et 2 l'une sur l'autre, le long du plan du joint 14 et au droit des armatures centrales 4 et 9, l'armature extérieure 5 est sertie sur le rebord 11 de l'armature intermédiaire 10. Suivant une technique connue, cette opération se fait en état d'immersion, afin d'assurer le remplissage par un liquide approprié, généralement de l'eau additionnée d'antigel, des chambres 6, 7 ménagées entre les blocs en élastomère 3 et 8.

Les pièces 1 et 2 étant assemblées, leurs armatures centrales 4 et 9 constituent l'armature intérieure classique d'une articulation élastique. Cette armature centrale est destinée à être reliée à un élément à isoler, par exemple par un goujon 15, tandis que l'armature extérieure 5 est destinée à être reliée à un autre élément non représenté.

Une articulation ainsi réalisée présente une très grande fiabilité et un maximum de garantie d'étanchéité.

Les Figures 1 et 3 font apparaître des protubérances intérieures radiales 16 et 17 destinées à servir de limiteurs de débattement par venue en butée sur l'armature intérieure 4, 9.

Dans l'exemple décrit, les chambres 6, 7 présentent des formes différentes. Il va de soi qu'elles pourraient être de mêmes formes. De même, le canal de liaison entre les alvéoles 6, 7 peut être ménagé dans les deux parties 4 et 9 de l'armature intérieure.

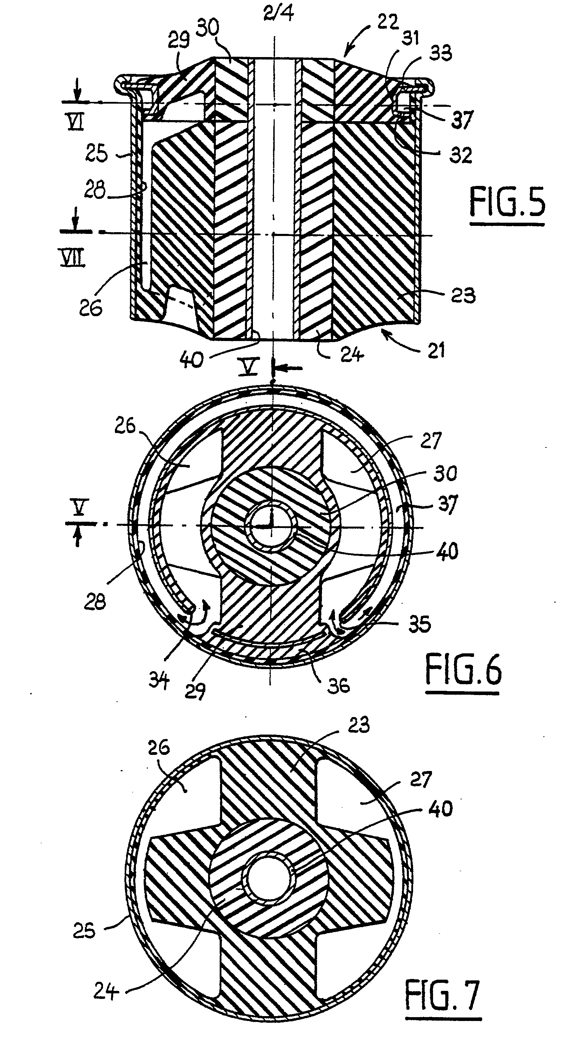

L'articulation représentée aux Figures 5 à 7 est formée par l'assemblage de deux pièces 21 et 22.

La pièce 21 comprend un bloc en élastomère 23 adhérisé sur une armature centrale 24 et sur une armature extérieure 25. Dans le bloc 23 sont ménagés deux alvéoles 26, 27 démoulant axialement. La face interne de l'armature extérieure 25, limitant les alvéoles 26 et 27 est revêtue d'une couche 28 d'élastomère.

La pièce 22 comprend un bloc en élastomère 29 adhérisé sur une armature centrale 30 et sur une armature secondaire 31 ayant, en section transversale la forme d'un U, ouvert vers l'extérieur, et à deux branches inégales 32, 33. La branche la plus étroite 32 est destinée à s'engager dans l'armature extérieure 25 de la pièce 21, tandis que la branche la plus large 33 est destinée à être sertie avec l'extrémité de cette même armature 25, après serrage axial des deux pièces 21 et 22 l'une sur l'autre.

Dans l'armature secondaire 31 sont percés deux orifices 34, 35, relativement proches l'un de l'autre, mais débouchant chacun dans l'une des chambres formées par les alvéoles 26 et 27. Sur le parcours le plus court entre ces orifices 34, 35, l'intérieur 36 du U constitué par l'armature secondaire 31 est rempli d'élastomère, tandis que le parcours le plus long forme, avec l'armature extérieure 25, un canal 37 de communication de grande longueur entre les deux chambres.

Dans cet exemple, les pièces 21 et 22 sont représentées emmanchées sur un tube central 40 permettant le passage d'un axe, non représenté, de liaison avec un ensemble à isoler, tandis que l'armature extérieure 25 est destinée à être reliée à un autre élément, non représenté.

Ce second exemple présente les mêmes avantages que le premier.

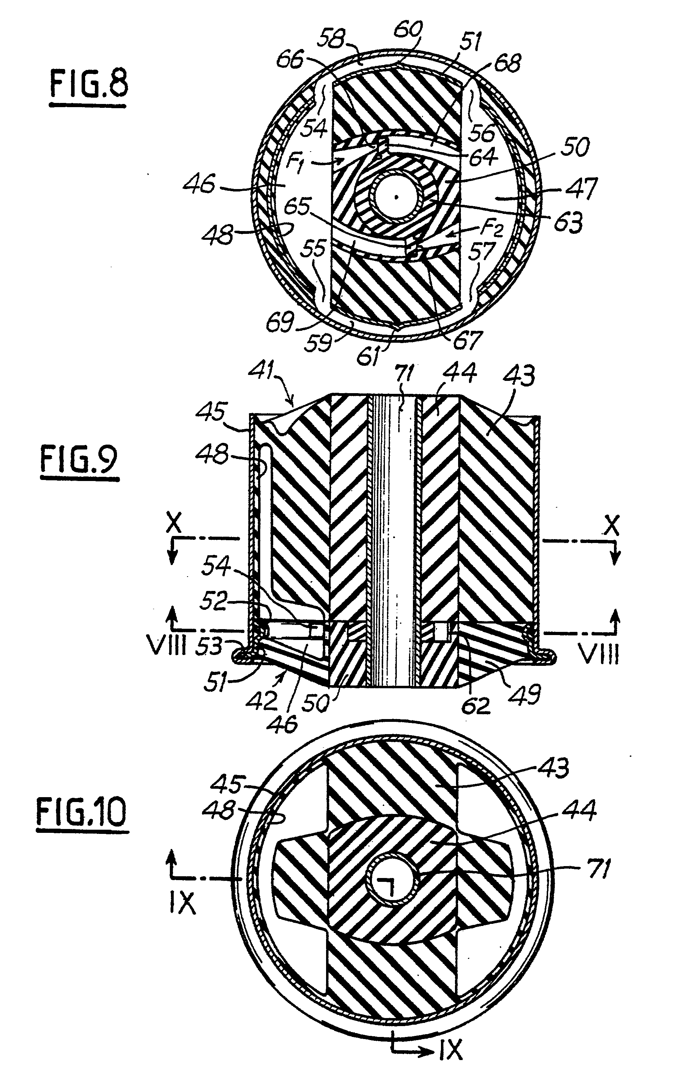

Le mode de réalisation de l'articulation illustré aux Figures 8 à 13 vise à fournir un perfectionnement permettant de modifier les caractéristiques d'écoulement du liquide entre les deux chambres formées dans l'articulation, de manière à produire un amortissement variable et une variation de la rigidité, en fonction de l'amplitude et de la fréquence de l'excitation. En d'autres termes, ce perfectionnement a pour but de réduire la raideur d'ensemble de l'articulation et d'accroître son effet d'amortissement dans le cas d'un choc ou, d'une façon plus générale, d'une grande vitesse de déplacement relatif entre les éléments reliés par l'articulation.

L'articulation représentée aux Figures 8 à 13 est formée par l'assemblage de deux pièces 41 et 42.

La pièce 41 comprend un bloc en élastomère 43 adhérisé sur une armature centrale 44 et sur une armature extérieure 45. Dans le bloc 43 sont ménagés deux alvéoles 46, 47 autorisant un démoulage axial. La face interne de l'armature extérieure 45, limitant les alvéoles 46 et 47 est revêtue d'une couche 48 d'élastomère reliée au bloc 43 à sa partie supérieure (Figure 2).

La pièce 42 comprend un bloc en élastomère 49 adhérisé sur une armature centrale 50 et sur une armature secondaire 51 ayant, en section transversale, la forme d'un U ouvert vers l'extérieur. L'une 52, des branches du U est destinée à s'engager dans l'armature extérieure 45 de la pièce 41, tandis que l'autre branche est prolongée par une collerette 53 destinée à être sertie avec l'extrémité de l'armature 45, après serrage axial des deux pièces 41 et 42 l'une sur l'autre.

Dans l'armature secondaire 51 sont percés quatre orifices 54, 55, 56, 57. Les orifices 54, 55, débouchent dans l'une, 46, des chambres formées entre les blocs en élastomère, tandis que les orifices 56, 57 débouchent dans l'autre chambre 47. Les orifices 54, 56 d'une part et 55, 57 d'autre part communiquent respectivement par des canaux 58, 59 formés entre l'armature secondaire 51 et l'armature extérieure 45, tandis que l'intérieur du U constitué par l'armature secondaire est rempli d'élastomère entre les orifices 54 et 55 d'une part et 56 et 57 d'autre part.

Eventuellement, une déformation localisée 60, 61 de l'armature secondaire 51 permet d'obtenir une section de passage calibrée sur le parcours des canaux 58 et 59.

La face de l'armature centrale 50 destinée à s'appliquer sur l'armature centrale 44 délimite un logement 62 dans lequel est placé un anneau 63 en élastomère comportant deux doigts sensiblement radiaux 64, 65 (Figure 5). Chacun de ces doigts est destiné à s'appliquer sur un siège 66, 67 délimitant un orifice de section réduite et formé dans un canal secondaire 68, 69, ménagé dans l'armature 50, ces deux canaux reliant les chambres 46 et 47. Les doigts 64 et 65 constituent donc des clapets anti-retour ne permettant le passage du liquide que dans un seul sens (F1 ou F2) dans chacun des canaux secondaires 68, 69 (Figure 1).

Pour des faibles vitesses d'écoulement du liquide entre les chambres 46, 47, le débit s'effectue uniquement par les canaux principaux 58, 59.

Pour des fortes vitesses d'écoulement, par exemple dans le cas d'un choc, entraînant une forte différence de pression entre les chambres 46, 47, l'un des clapets 64, 65 s'écarte de son siège 66, 67 et du liquide transite également par le canal secondaire correspondant 68, 69, diminuant ainsi la raideur de l'articulation et accroissant l'effet d'amortissement.

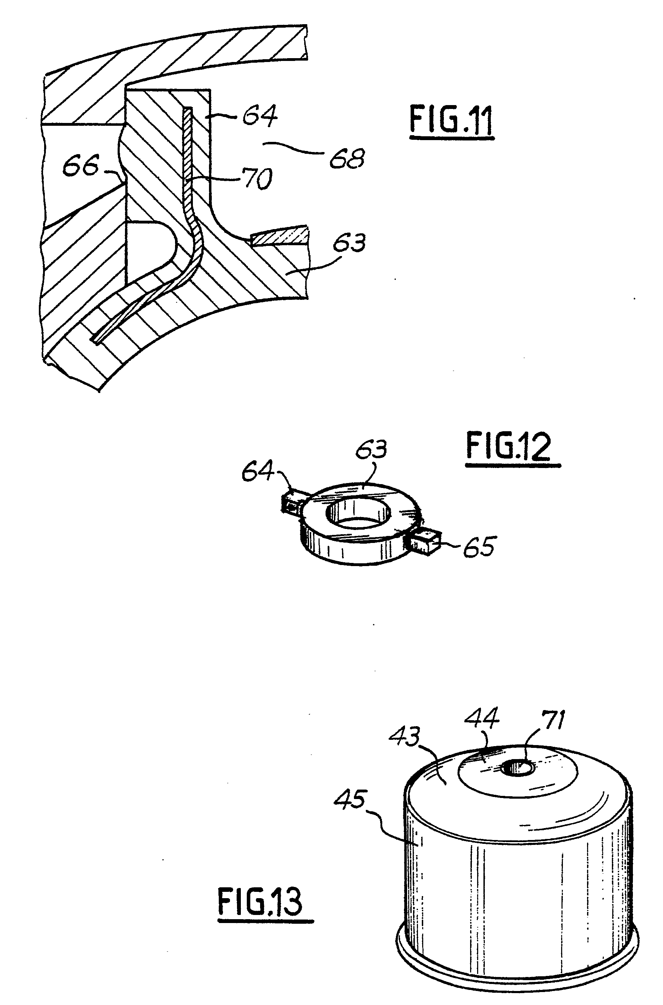

Selon le résultat désiré, on peut choisir la raideur des clapets 64, 65 en agissant sur leur épaisseur ou en y noyant un clinquant 70 comme représenté sur la Figure 11.

Dans l'exemple décrit on a prévu deux canaux principaux 58, 59 entre les chambres 46, 47. Il va de soi que l'invention s'appliquerait de la même façon à une articulation ne comportant qu'un seul canal principal comme représenté sur les Figures 5 à 7.

Comme dans cet exemple précédent, les pièces 41 et 42 sont ici emmanchées sur un tube central 71 permettant le passage d'un axe, non représenté, de liaison avec un ensemble à isoler, tandis que l'armature extérieure 45 est destinée à être reliée à un autre élément, non représenté.

**Revendications**

1. Articulation élastique, comprenant une armature intérieure (4, 9; 24, 30) et une armature extérieure (5; 25) reliées par une masse en élastomère (3, 8; 23, 29) dans laquelle sont ménagées deux chambres (6, 7; 26, 27) remplies de liquide et reliées entre elles par un canal (13; 37), caractérisée en ce qu'elle est formée de deux pièces (1, 2; 21, 22) constituées chacune par une partie (4, 9; 24, 30) de l'armature intérieure et une partie (3, 8; 23, 29) de la masse en élastomère ménageant des alvéoles (6, 7; 26, 27) démoulables axialement, l'une (1; 21) des pièces comprenant en outre l'armature extérieure (5; 25), tandis que l'autre pièce (2; 22) comprend une armature secondaire (10; 31), les armatures extérieure (5; 25) et secondaire (10; 31) étant serties l'une sur l'autre après serrage axial des deux pièces (1, 2; 21, 22).

2. Articulation selon la revendication 1, caractérisée en ce que le canal (13) de liaison entre les chambres formées par les alvéoles (6, 7) est ménagé entre les extrémités en regard des deux parties (4, 9) de l'armature intérieure.

3. Articulation selon la revendication 1, caractérisée en ce que le canal (37) de liaison entre les chambres formées par les alvéoles (26, 27) est ménagé entre les armatures secondaire (31) et extérieure (25).

4. Articulation selon la revendication 1, caractérisée en ce que, le canal (58, 59) reliant les deux chambres (46, 47) étant délimité entre les armatures secondaire (51) et extérieure (45), les deux chambres (46, 47) sont de plus reliées par deux canaux secondaires (68, 69) disposés en parallèle avec le ou chaque canal de liaison principal (58, 59) et munis chacun d'un clapet unidirectionnel (64, 67), ces clapets étant normalement fermés et adaptés pour s'ouvrir dans des sens opposés, sous l'effet d'une différence de pression déterminée entre les deux chambres (46, 47).

5. Articulation suivant la revendication 4, caractérisée en ce que les canaux secondaires (68, 69) sont ménagés dans l'une des armatures intérieures.

6. Articulation suivant la revendication 5, caractérisée en ce que chacun des deux canaux secondaires (68, 69) délimite un siège (66, 67) avec lequel coopère un clapet respectif (64, 65).

7. Articulation suivant la revendication 6, caractérisée en ce que ladite armature intérieure (50) comporte dans sa face adjacente à l'autre armature intérieure (44) un logement annulaire (62) débouchant en deux points diamétralement opposés dans les deux canaux secondaires, au voisinage des sièges (66, 67), un anneau (63) étant reçu dans ce logement et comportant deux doigts radiaux (64, 65) qui constituent lesdits clapets.

8. Articulation suivant la revendication 7, caractérisée en ce qu'il est prévu dans chaque doigt radial une armature métallique élastique (70).

**Patentansprüche**

1. Elastisches Gelenk mit einer inneren Stütze (4, 9; 24, 30) und einer äußeren Stütze (5, 25), die durch eine Elastomermasse (3, 8; 23, 29), in der zwei, mit einer Flüssigkeit gefüllte und miteinander über einen Kanal (13; 37) verbundene Kammern (6, 7; 26, 27) ausgespart sind, untereinander verbunden sind, dadurch gekennzeichnet, daß es in zwei Teilen (1, 2; 21, 22) ausgebildet ist, die jeweils aus einem Abschnitt (4, 9; 24, 30) der inneren Stütze und einem Abschnitt (3, 8; 23, 29) der elastomeren Masse bestehen, unter Ausbildung von axial entnehmbaren Zellen (6, 7; 26, 27), wobei eines (1; 21) der Teile zusätzlich die äußere Stütze (5; 25) umfaßt, während das andere Teil (2; 22) eine Hilfsstütze (10; 31) umfaßt, wobei die äußere Stütze (5; 25) und die Hilfsstütze (10; 31) nach axialer Verspannung der beiden Teile (1, 2; 21, 22) untereinander festgeklemmt worden sind.

2. Gelenk nach Anspruch 1, dadurch gekennzeichnet, daß der Verbindungskanal (13) zwischen den durch die Zellen (6, 7) gebildeten Kammern zwischen den gegenüberliegenden Enden der beiden Abschnitte (4, 9) der inneren Stütze ausgebildet ist.

3. Gelenk nach Anspruch 1, dadurch gekennzeichnet, daß der Verbindungskanal (37) zwischen den durch die Zellen (26, 27) gebildeten Kammern zwischen der Hilfsstütze (31) und der äußeren Stütze (25) ausgebildet ist.

4. Gelenk nach Anspruch 1, dadurch gekennzeichnet, daß der die beiden Kammern (46, 47) verbindende Kanal (58, 59) zwischen der Hilfsstütze (51) und der äußeren Stütze (45) begrenzt ist, wobei die beiden Kammern (46, 47) zusätzlich durch zwei Hilfskanäle (68, 69) verbunden sind, die parallel zu dem oder jedem Haupt-Verbindungskanal (58, 59) angeordnet und jeweils mit einem unidirektionalen Ventil (64, 67) bestückt sind, wobei diese Ventile in der Regel geschlossen und zum Öffnen in entgegengesetzter Richtung unter dem Einfluß einer zwischen den beiden Kammern (46, 47) herrschenden Druckdifferenz angebracht sind.

5. Gelenk nach Anspruch 4, dadurch gekennzeichnet, daß die Hilfskanäle (68, 69) in einer der inneren Stützen ausgespart sind.

6. Gelenk nach Anspruch 5, dadurch gekennzeichnet, daß jeder der beiden Hilfskanäle (68, 69) einen Sitz (66, 67) begrenzt, mit dem ein zugehöriges Ventil (64, 65) zusammenwirkt.

7. Gelenk nach Anspruch 6, dadurch gekennzeichnet, daß die genannte innere Stütze (50) in ihrer der anderen inneren Stütze (44) benachbarten Fläche eine ringförmige Mulde (62) umfaßt, die an zwei diametral gegenüberliegenden Punkten in die beiden Hilfskanäle einmündet, benachbart den Sitzen (66, 67) und ein Ring (63) in der Mulde einsitzt und zwei radiale Zapfen (64, 65) umfaßt, die die genannten Ventile bilden.

8. Gelenk nach Anspruch 7, dadurch gekennzeichnet, daß in jedem radialen Zapfen eine elastische metallische Stütze (70) angeordnet ist.

**Claims**

1. An elastic articulation comprising an inner armature (4, 9; 24, 30) and an outer armature (5, 25) interconnected by a mass of elastomer (3, 8; 23, 29) in which are formed two chambers (6, 7; 26, 27) filled with liquid and interconnected by a passageway (13, 27), characterised in that said articulation is formed by two elements (1, 2; 21, 22) each constituted by a part (4, 9; 24, 30) of the inner armature and a part (3, 8; 23, 29) of the mass of elastomer defining cavities (6, 7; 26, 27) which allow an axial removal from a mould, one (1; 21) of the elements further comprising the outer armature (5; 25) while the other element (2; 22) comprises a secondary armature (10; 31), the outer (5; 25) and secondary (10; 31) armatures being crimped one on the other after an axial clamping together of the two elements (1, 2; 21, 22).

2. An articulation according to claim 1, characterised in that the passageway (13) interconnecting the chambers formed by the cavities (6, 7) is provided between opposed ends of the two parts (4, 9) of the inner armature.

3. An articulation according to claim 1, characterised in that the passageway (37) interconnecting the chambers formed by the cavities (26, 27) is provided between the secondary armature (31) and outer armature (25).

4. An articulation according to claim 1, characterised in that the passageway (58, 59) interconnecting the two chambers (46, 47) is defined between the secondary armature (51) and outer armature (45) and the two chambers (46, 47) are also interconnected through two secondary passageways (68, 69) arranged in parallel with the or each main connecting passageway (58, 59) and each provided with a one way valve (64, 67), said valves being normally closed and adapted to open in opposite directions under the effect of a given pressure difference between the two chambers (46, 47).

5. An articulation according to claim 4, characterised in that the secondary passageways (68, 69) are provided in one of the inner armatures.

6. An articulation according to claim 5, characterised in that each of the two secondary passageways (68, 69) defines a seat (66, 67) with which a respective valve cooperates (64, 65).

7. An articulation according to claim 6, characterised in that said inner armature (50) comprises in the surface thereof adjacent to the other inner armature (44) an annular recess (62) which opens, at two diametrically opposed points, onto the two secondary passageways in the vicinity of the seats (66, 67), a ring (63) being received in said recess and including two radial finger members (64, 65) which constitute said valves.

8. An articulation according to claim 7, characterised in that it comprises in each radial finger member a resilient metal stay.

FIG. 2

FIG.1

FIG.3

FIG.4

FIG.5

FIG.6

FIG.7

EP 0 234 966 B1

FIG.8

FIG.9

FIG.10

EP 0 234 966 B1

FIG.11

FIG.12

FIG.13